# EUROPEAN PATENT SPECIFICATION

(11) **EP 4 170 778 B1**
(45) Date of publication and mention of the grant of the patent: **16.10.2024**
(21) Application number: 22203022.3
(22) Date of filing: 21.10.2022
(51) Int. Cl.: H01M 10/613, H01M 10/625, H01M 10/647, H01M 10/658, H01M 50/211, H01M 50/224, H01M 50/222, H01M 50/271, H01M 50/291, H01M 50/367, H01M 50/503, H01M 50/507

(54) **BATTERY PACK**
BATTERIEPACK
BLOC-BATTERIE

(30) Priority: 25.10.2021 KR 20210142559
(43) Date of publication of application: 26.04.2023
(73) Proprietor: SK On Co., Ltd., Seoul 03161 (KR)
(72) Inventor: JUNG, Jun Hee, 34124 Daejeon (KR); KO, Jeong Woon, 34124 Daejeon (KR); KU, Bon Seok, 34124 Daejeon (KR); YUN, Ja Sung, 34124 Daejeon (KR); LEE, Jeong Hwan, 34124 Daejeon (KR); CHO, Sei Hoon, 34124 Daejeon (KR); CHOI, Ha Neul, 34124 Daejeon (KR); HWANG, Jae Il, 34124 Daejeon (KR)
(74) Representative: Prüfer & Partner mbB Patentanwälte · Rechtsanwälte

(56) References cited:
- BR-A- PI0 517 029
- CN-A- 103 746 081
- CN-A- 112 787 020
- JP-A- 2001 345 117
- JP-A- 2015 106 491
- US-A1- 2021 320 374

## Description

### BACKGROUND

### 1. FIELD

The present disclosure relates to a battery pack.

### 2. DESCRIPTION OF RELATED ART

A secondary battery, referring to a battery that may be charged and discharged, unlike a primary battery that cannot be charged, has been applied to electric vehicles (EVs), hybrid electric vehicles (HEVs), and the like, driven by an electrical motive power source, as well as portable devices.

Lithium ion batteries, lithium polymer batteries, nickel cadmium batteries, nickel hydrogen batteries, nickel zinc batteries or the like have been widely used as secondary batteries. Such a unit secondary battery cell, i.e., a unit battery cell, has an operating voltage of about 2.5V to 4.6V. Therefore, if a higher output voltage is demanded, a plurality of secondary battery cells may be connected in series to configure a battery pack. In addition, according to a charge/discharge capacity required for the battery pack, a plurality of battery cells may also be connected in parallel to configure a battery pack. Therefore, the number of secondary battery cells included in the battery pack may be set to be various, depending on a required output voltage or charge/discharge capacity.

Types of secondary batteries currently widely used include lithium ion batteries, lithium polymer batteries, nickel cadmium batteries, nickel hydrogen batteries, nickel zinc batteries, and the like. The unit secondary battery cell, that is, the operating voltage of the unit battery cell is about 2.5V to 4.6V. Accordingly, when a higher output voltage is required, a plurality of battery cells are connected in series to form a battery pack. In addition, a plurality of battery cells may be connected in parallel to form a battery pack according to the charge/discharge capacity required for the battery pack. Accordingly, the number of battery cells included in the battery pack may be variously set according to a required output voltage or charge/discharge capacity.

When a specific battery cell or battery module malfunctions in a battery pack including a plurality of battery cells or battery modules, gas or conductive particles may be ejected into the pack, which may affect other battery cells or battery modules to cause a chain of thermal runaway. When the battery pack is mounted in a vehicle, thermal runaway of the battery pack may threaten the life of a driver or passengers, and thus, a method for preventing or delaying thermal runaway is required.

Document CN112787020A discloses a battery pack assembly comprising a plurality of battery pack modules with a housing, with a smoke exhaust channel communicating the inside with the outside of the battery pack through a valve. Cell thermal insulation elements are disposed between the plurality of single cells in the battery modules, and exhaust ports are provided at the side beam of the battery pack.

Document US2021320374A1 discloses a battery housing formed by upper and lower housings comprising a plurality of battery cells, forming a plurality of cell stack assemblies, with flow path holes for connecting the inside and outside of the battery housing.

Document JP2015106491A discloses a battery having a vent having a stepped (two-stage) structure; in the larger diameter part side of the vent, a valve is inserted and worn.

### SUMMARY

Exemplary embodiments provide a battery pack having a high degree of safety. In particular, exemplary embodiments provide a structure capable of discharging high-temperature flammable gas, caused by thermal runaway of a battery pack, externally as quickly as possible without ignition.

Exemplary embodiments provide a multilayer electronic component provide a multilayer electronic component including a uniform plating layer.

According to an aspect of the present disclosure, a battery pack includes: a pack housing; at least one battery module disposed inside the pack housing; and a vent hole connecting inside and outside of the pack housing, wherein the battery module includes a plurality of battery cells and a first thermal propagation (TP) blocking member disposed between the plurality of battery cells, wherein the vent hole is formed so that a cross-sectional area of an outlet side connected to an external space of the pack housing is smaller than a cross-sectional area of an inlet side connected to the internal space of the pack housing, wherein the vent hole includes:
a first region connected to the inlet side of the pack housing,
a second region connected to the outlet side of the pack housing and having a relatively small cross-sectional shape compared to the first region, wherein the second region extends to the outlet side in a form in which a cross-sectional area thereof decreases, and
a boundary region (BA) located between the first region and the second region, connecting the first region and the second region to have a curve.

The battery pack may further include: an internal busbar coupled to the plurality of battery cells, wherein the first TP blocking member may be coupled to the internal busbar.

The pack housing may include a pack cover covering an upper portion of the battery module, and a second TP blocking member may be disposed between the upper portion of the battery module and the pack cover.

The second TP blocking member may be formed to surround an upper portion and a side portion of the battery module.

A total cross-sectional area of the vent hole may be greater than 1,000 mm² and less than or equal to 4,000 mm².

An air layer having a thickness of 100 mm or less may be formed between the at least one battery module and the pack cover.

The at least one battery module may include a plurality of battery cells and a module case accommodating the plurality of battery cells, and the air layer may be defined as a space between the pack cover and the module case.

At least a portion of the vent hole may have a cross-sectional area decreasing from the inlet side to the outlet side.

The pack cover may include a steel material.

In an exemplary embodiment, the pack housing may include a side frame surrounding the at least one battery module, and a sealing member may be disposed between the side frame and the pack cover.

The battery pack may further include an external busbar electrically connecting at least two battery modules to each other; and a cover member surrounding a surface of the external busbar.

The cover member may include a fire resistant material or an insulating material. The first TP blocking member may include a heat resistant sheet and a pad disposed on at least one surface of the heat resistant sheet and formed of a material that is elastically deformed. The pad may have a thermal conductivity of 0.1 W/(m·K) or less. The pad may have an insulation resistance of 500 MΩ or more. The heat resistant sheet may include mica.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view of a battery pack according to an exemplary embodiment;
FIG. 2 is an exploded perspective view of a battery pack according to an exemplary embodiment;
FIG. 3 is an exploded perspective view of a battery module according to an exemplary embodiment;
FIG. 4 illustrates a vent portion according to a first exemplary embodiment;
FIG. 5 illustrates a vent portion according to a second exemplary embodiment;
FIG. 6A to FIG. 6D show a vent portion according to a third exemplary embodiment;
FIG. 7A and FIG. 7B show a vent portion according to a fourth exemplary embodiment;
FIG. 8 is an internal cross-sectional view of a battery pack according to an exemplary embodiment;
FIG. 9 is an internal cross-sectional view of a battery pack in which a battery module and a pack cover are coupled to an adhesive member according to an exemplary embodiment;
FIG. 10 is an internal cross-sectional view of a battery pack in which a battery module and a pack cover are mechanically coupled according to an exemplary embodiment;
FIG. 11 illustrates an external busbar and a cover member according to an exemplary embodiment;
FIG. 12 illustrates a TP blocking member surrounding the outside of a battery module according to an exemplary embodiment; and
FIG. 13 is an example of a TP blocking member disposed between battery cells according to an exemplary embodiment.

### DETAILED DESCRIPTION

The terms used in the following description and claims are widely used common expressions selected by considering functions in various embodiments of the present disclosure. However, such terms may vary depending upon an intention of a person having ordinary skill in the art (hereinafter referred to as 'those skilled in the art'), legal/technical interpretations, or advent of new technologies. Some of the terms were selected arbitrarily by an applicant, and the terms may be interpreted as defined herein. Unless otherwise defined, the terms may be interpreted based on overall descriptions of the present disclosure and common technical knowledge in the art.

In the following description, like drawing reference numerals and symbols refer to the like elements which perform substantially the same function, even in different drawings, for convenience in explanation and for better understanding. That is, although a plurality of drawings share elements having the same reference numerals, the plurality of drawings do not relate to one embodiment.

In the following description and claims, a term including an ordinal, such as, 'first' or 'second,' may be used to distinguish elements. The ordinal is used to distinguish the same or similar elements and does not limit the meaning of the term. For instance, ordinals do not affect an order of use or an order of arrangement of elements expressed with the ordinals. Respective ordinals may be replaced with each other, if necessary.

A term in a singular form includes a plural form unless it is intentionally written that way. That is, even if a component is expressed in a singular form in this document, it should not be construed as excluding that the corresponding component is provided in plural unless otherwise specified. For example, when it is assumed that a first member is disposed on a frame in an embodiment, the embodiment is not limited to a case in which only one first member disposed on the frame but should be understood as including a case in which two or more first members are disposed on the frame.

A term, such as, 'include' or 'form,' refers to the disclosed features, numbers, steps, operations, elements, parts, or combinations thereof and is not intended to exclude any possibilities of existence or addition of one or more other features, numbers, steps, operations, elements, parts, or combinations thereof.

In this document, the X-direction, Y-direction, and Z-direction mean a direction parallel to the X-axis, a direction parallel to the Y-axis, and a direction parallel to the Z-axis illustrated in the drawings, respectively. In addition, unless otherwise specified, the X-direction is a concept including both the +X-axis direction and the -X-axis direction, which is also applied to the Y-direction and the Z-direction.

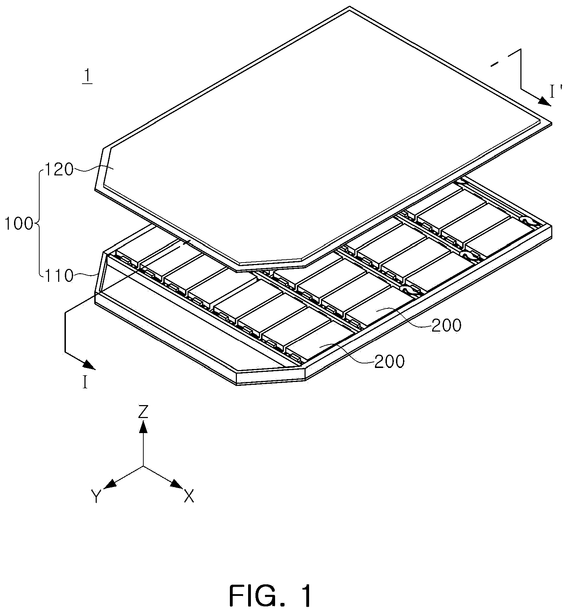

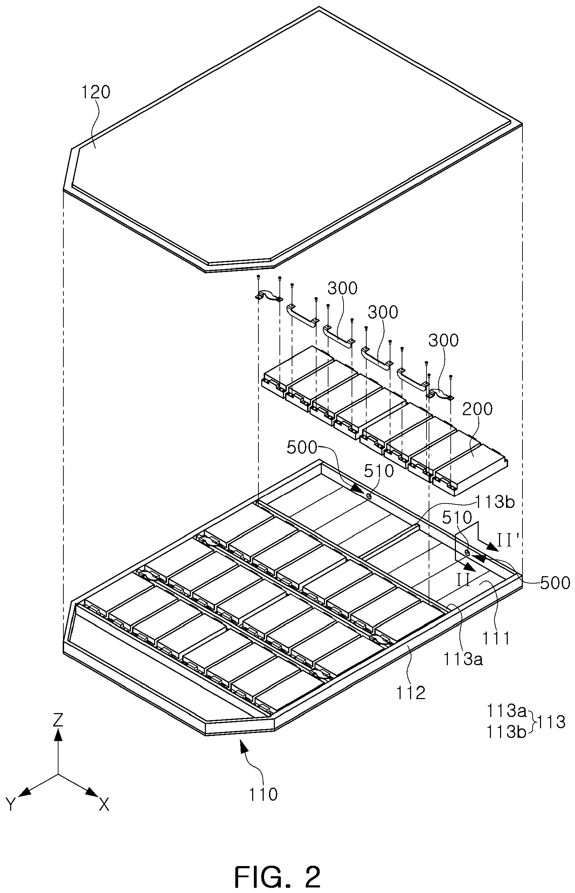

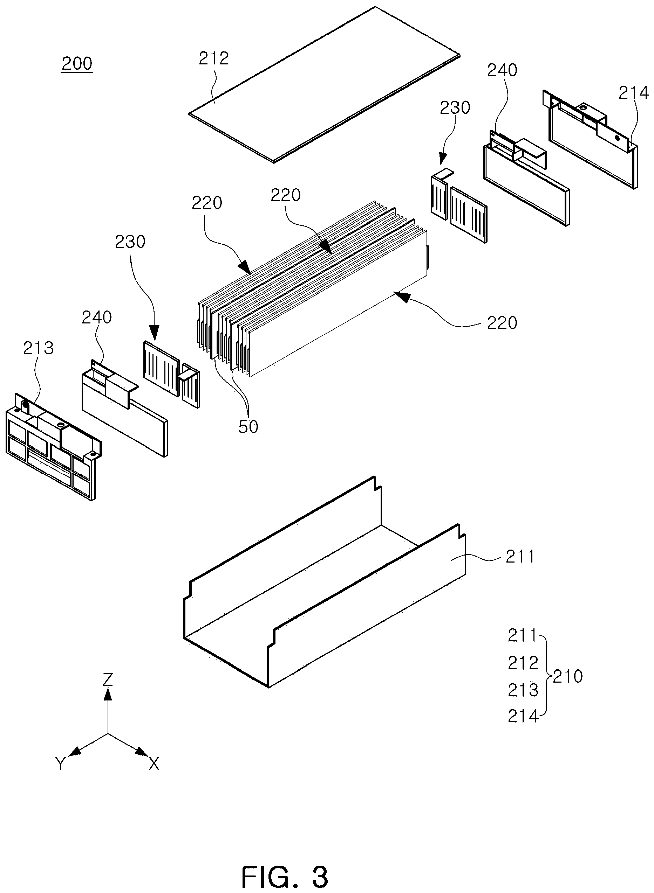

FIG. 1 is a perspective view of a battery pack according to an exemplary embodiment. FIG. 2 is an exploded perspective view of a battery pack according to an exemplary embodiment. FIG. 3 is an exploded perspective view of a battery module according to an exemplary embodiment.

Referring to FIGS. 1 and 2, in an exemplary embodiment, a battery pack 1 may include a pack housing 100 and a plurality of battery modules 200 disposed inside the pack housing 100.

The pack housing 100 includes a pack frame 110 and a pack cover 120 coupled to an upper portion of the pack frame 110. The pack frame 110 includes a lower plate 111 and a side frame 112 extending upwardly from the lower plate 111.

At least one partition 113 traversing an internal space of the pack housing 100 vertically or horizontally may be disposed on the lower plate 111. In the illustrated exemplary embodiment, a partition 113a extending in the X direction and a partition 113b extending in the Y direction are disposed to divide the inside of the pack housing 100 into several compartments.

At least one battery module 200 may be disposed in the space divided by the partition 113. In the illustrated exemplary embodiment, four battery modules 200 are arranged in one compartment. Meanwhile, a shape of the pack housing 100 and the number of battery modules 200 are examples, and the exemplary embodiment in the present disclosure is not limited thereto. For example, the partition 113 may be disposed to form 7 or fewer or 9 or more compartments inside the pack. As another example, three or less or five or more battery modules 200 may be disposed in a single compartment.

Referring to FIG. 3, in an exemplary embodiment, the battery module 200 includes a module case 210 and a plurality of battery cells accommodated in the module case 210.

The module case 210 may be formed integrally or may be formed by coupling a plurality of cover plates. For example, FIG. 1 shows a structure of the battery module 200, and the module case 210, having a structure surrounding the lower and both side surfaces of the battery cell 220, may include a lower cover plate 211 formed in an integral 'C' shape, an upper cover plate 212 covering an upper portion of the battery cell 220, a front cover plate 213 covering a front of the battery cell 220, and a rear cover plate covering a rear of the battery cell 220. The shape and size of the module case 210 are not particularly limited and may be appropriately selected according to the purpose, the shape and number of battery cells 220 accommodated in the internal space.

The module case 210 performs a function of supporting and protecting the battery cells 220, and may perform a function of supporting and protecting the battery cell 220, cooling the battery cell 220 through water cooling or air cooling to protect the secondary battery from heat generated during charging and discharging of the battery module 200, and maintaining a temperature at an appropriate level. Accordingly, the module case 210 is preferably formed of a material having excellent thermal conductivity, may be formed of a metal material such as aluminum, gold, pure silver, tungsten, copper, nickel, or platinum, and preferably, aluminum, but is not limited thereto.

The battery cells 220 accommodated in the module case 210 may be electrically connected to each other. Meanwhile, the number of battery cells 220 accommodated in the module case 210 may be adjusted according to purposes and is not particularly limited.

Meanwhile, the battery cell 220 may include an electrode assembly accommodated in a pouch-type casing, and the battery cell 220 according to the present disclosure may be used without limitation as long as it is commonly used. For example, the electrode assembly may include a positive electrode including a positive electrode active material, a negative electrode including a negative electrode active material, and a separator, and the positive electrode may be manufactured by applying a mixture of a positive electrode active material, a conductive agent, and a binder on a positive electrode current collector and drying the applied mixture. The positive electrode current collector is not particularly limited as long as it has high conductivity without causing a chemical change in the battery. For example, the positive electrode current collector may be formed of stainless steel, aluminum, nickel, titanium, sintered carbon, or aluminum, or may be formed of stainless steel surface-treated with carbon, nickel, titanium, silver, etc. The current collector may have fine irregularities on a surface thereof to increase an adhesive force of the positive electrode active material, and may have various forms such as a film, sheet, foil, net, porous body, foam body, and non-woven body.

An internal busbar 230 electrically connected to the battery cell 220 may be included on a side from which an electrode lead of the battery cell 220 protrudes. Since the internal busbar 230 is formed on the side from which the electrode lead protrudes, the internal busbar may be formed on at least one of the front and rear sides of the battery cell. The internal busbar 230 may include a metal having excellent conductivity, for example, copper.

Referring to FIGS. 1 to 3, the battery modules 200 are electrically connected to each other through an external busbar 300. The internal busbar 230 of the battery module 200 may be at least partially exposed externally of the module case 210 to be connected to the external busbar 300 connecting the battery modules 200 to each other.

The battery module 200 may include an insulating cover 240 covering the internal busbar 230 in order to protect the internal busbar 230 and secure insulation. The insulating cover 240 may be coupled to the internal busbar 230 with each other or by a hook. The insulating cover 240 may be formed of one or more selected from the group consisting of modified polypropylene oxide (MPPO), polycarbonate (PC), polyethylene (PE), and polybutylene terephthalate (PBT). As described above, the insulating cover 240 may be covered by the front cover plate 213 and the rear cover plate 214 constituting the module case 210 to configure the battery module 200.

In an exemplary embodiment, the battery module 200 may include a first thermal propagation (TP) blocking member 50 disposed between cells among the plurality of battery cells 220. The first TP blocking member 50 may be formed of a material having at least one of high heat insulation, high heat resistance, and high fire resistance. The first TP blocking member 50 may be configured to minimize propagation of heat generated in one battery cell to other nearby battery cells.

In an exemplary embodiment, the first TP blocking member 50 may be disposed between battery cell groups including two or more battery cells. For example, referring to FIG. 3, the first TP blocking member 50 may be alternately arranged with a battery cell group including four battery cells.

The first TP blocking member 50 may be formed of a material including at least one of a polymer material, an inorganic material, and a ceramic material. Here, the polymer material may include, for example, a material such as a silicone-based material. Also, the inorganic material may include a material that does not contain carbon (C), for example, mica, lime, salt, silicon compounds such as glass, and some metals such as iron. The ceramic material may include a material formed of oxide, carbide, nitride, or the like formed as a metal element such as silicon (Si), aluminum (Al), titanium (Ti), zirconium (Zr) is combined with oxygen, carbon, nitrogen, and the like. These ceramic materials may be formed using natural raw materials, such as clay, kaolin, feldspar, silica, etc., or may be formed using a synthetic raw material such as silicon carbide, silicon nitride, alumina, zirconia, barium titanate, and the like.

In an exemplary embodiment, the first TP blocking member 50 may be coupled to the internal busbar 230. For example, one end of the first TP blocking member 50 may be coupled to the internal busbar 230. In another exemplary embodiment, the internal busbar 230 may be seated on an insulating plate, and the first TP blocking member 50 may be coupled to the insulating plate.

Meanwhile, gas inside the battery pack 1 may be discharged externally of the pack housing 100 through a vent portion 500 provided in the pack housing 100. The vent portion 500 includes a vent hole 510 connecting the inside and the outside of the pack housing 100.

If the gas generated in the battery pack 1 is discharged externally too slowly or if too much gas is discharged at once, flames may occur outside the battery pack 1. Therefore, it is advantageous to discharge the gas occurring in the battery pack 1 externally of the battery pack 1 at an appropriate rate.

According to the exemplary embodiments described below, even if flammable gas is ejected from the battery module 200, the gas may pass through the inside of the battery pack 1 and escape externally, without being ignited. Since the air inside the pack entirely escapes externally of the pack within a few seconds after thermal runaway, it may be difficult for a high-temperature and high-pressure gas ejected from the battery module 200 to mix with the air in an appropriate ratio, and accordingly, the gas may not be ignited or burnt and may be ejected externally of the pack 1.

According to an exemplary embodiment, by appropriately setting a size of the vent hole 510, a speed at which gas is ejected externally of the battery pack 1 may be relatively fast, which may prevent flames from occurring outside the battery pack 1. This is because if the speed of the gas is high enough, the gas may not be sufficiently mixed with the external air, and thus, diffusion combustion may not occur. That is, the high-temperature gas inside the battery pack 1 may be ejected externally of the battery pack 1, without being ignited.

According to an exemplary embodiment, the gas ejected after thermal runaway prevents the occurrence of flames due to a rapid increase in the gas concentration inside the battery pack 1, or the discharge amount of conductive particles may be reduced due to an increase in internal pressure, thereby preventing an external short circuit or ignition.

In an exemplary embodiment, a cross-sectional area of the vent hole 510 may be adjusted so that the gas generated in the battery cell is not ignited. The cross-sectional area of the vent hole 510 refers to an area of a plane, perpendicular to a gas discharge direction. For example, when the vent hole 510 is provided in the form of a circular pipe having an inner radius of r, the cross-sectional area of the vent hole 510 is (the ratio of the circumference of a circle to its diameter)*r². In an exemplary embodiment, when one or more vent portions 500 (or vent holes 510) are provided, a total cross-sectional area of the vent holes 510 may be greater than 1,000 mm² and less than or equal to 4,000 mm². In this case, the cross-sectional area may be a cross-sectional area of an outer side of the vent hole 510 in contact with external air. In the illustrated exemplary embodiment, two vent portions 500 are provided, but this is only an example, and one or three or more vent portions 500 may be provided.

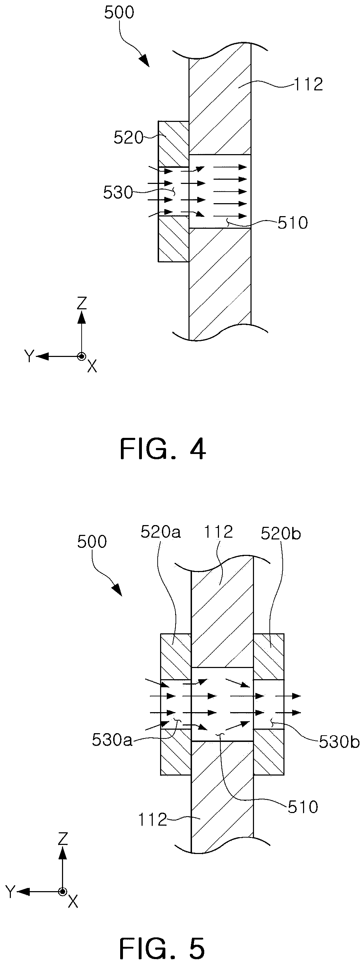

FIG. 4 illustrates a vent portion according to a first exemplary embodiment. FIG. 5 illustrates a vent portion according to a second exemplary embodiment. FIGS. 4 and 5 are cross-sectional views of the vent portion 500 taken along line II-II' in FIG. 2.

Referring to FIGS. 4 and 5, in an exemplary embodiment, a cross-sectional area of the vent hole 510 of the battery pack 1 may be appropriately set according to the specifications of the battery pack 1. The amount of gas generated inside the battery pack 1 per unit time depends on the quantity and chemical composition of the battery module 200 (or battery cells 220) accommodated inside the battery pack 1, and thus, in order to control a gas exhaust rate according to a design intention, it may be necessary to form the vent hole 510 to have different cross-sectional areas in consideration of the above factors.

In an exemplary embodiment, the vent portion 500 may include a gas discharge unit 520. For example, when the amount of gas generated per unit time is large, the gas discharge unit 520 having a large vent hole 530 may be selected. On the contrary, when the amount of gas generated per unit time is small, the gas discharge unit 520 having a small vent hole 530 may be selected. In this case, the vent hole 510 includes the vent hole 530.

At least one gas discharge unit 520 may be provided and may be coupled to one surface of the side frame 112 in which the vent hole 510 is formed. The gas discharge unit 520 of the present exemplary embodiment may be detachably coupled to the side frame 112. Accordingly, the gas discharge unit 520 may be replaced by an operator as necessary.

The gas discharge unit 520 may be formed in a square flat plate shape and has at least one vent hole 530 therein.

The vent hole 530 is formed in the form of a through-hole and may be formed in a size smaller than the vent hole 510 of the side frame 112. Also, the gas discharge unit 520 may be coupled to the side frame 112 such that the vent hole 530 overlaps the vent hole 510.

Here, disposing the vent hole 530 to overlap the vent hole 510 refers to disposing the vent hole 530 such that at least a portion thereof is connected to the vent hole 510.

The gas discharge unit 520 may be coupled to the side frame 112 through a separate fixing member such as a screw or bolt. To this end, the gas discharge unit 520 and the side frame 112 may have a fastening hole into which a fixing member is inserted. However, the present disclosure is not limited thereto, and various members may be used as long as the gas discharge unit 520 may be firmly coupled to one surface of the side frame 112.

The operator may select the gas discharge unit 520 in which the vent hole 530 having a suitable size is formed as needed and couple the gas discharge unit 520 to the side frame 112. For example, the gas discharge units 520a and 520b may include vent holes 530a and 530b having different sizes, respectively.

The size of the vent hole 530 may be defined in consideration of a type of battery cells accommodated in the battery pack 1 or a size of the internal space of the side frame 112.

Through such a configuration, the operator may selectively couple only the gas discharge unit 520 to the pack housing 100 having the same shape, thereby completing the battery pack 1 including a gas outlet having a desired size.

Referring to FIG. 5, in an exemplary embodiment, a plurality of gas discharge units 520 may be provided. For example, two or more gas discharge units 520a and 520b may be coupled to the battery pack 1. A first gas discharge unit 520a is coupled to an inner surface of the side frame 112, and a second gas discharge unit 520b is coupled to an outer surface of the side frame 112.

When the battery pack 1 does not include the gas discharge unit 520, pack housings in which gas outlets of various sizes are formed to correspond to the various battery cells 220 or the various battery modules 200 should be provided. In this case, the manufacturing costs may increase significantly. When the gas discharge unit 520 is configured to be selectively coupled as in the present exemplary embodiment, the pack housings may be manufactured collectively, which may minimize manufacturing costs.

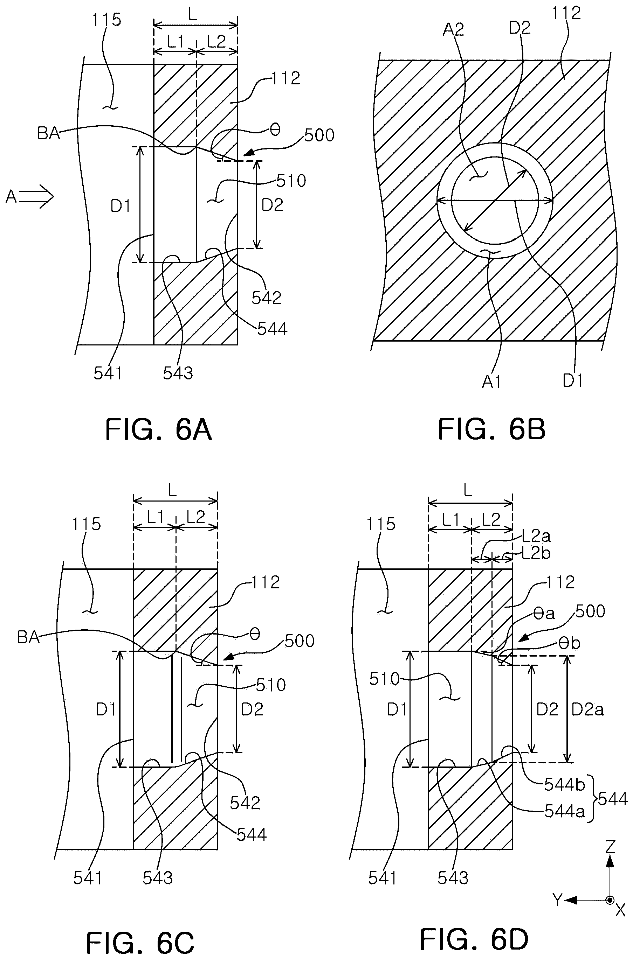

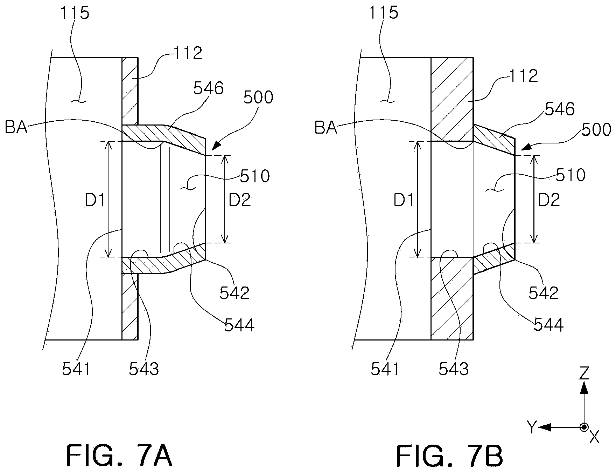

FIG. 6A to FIG. 6D show a vent portion according to a third exemplary embodiment. FIG. 7A and FIG. 7B show a vent portion according to a fourth exemplary embodiment. FIG. 6A to FIG. 7B are cross-sectional views of the vent portion 500 taken along line II-II' in FIG. 2.

Referring to FIG. 6A to FIG. 7B, the vent portion 500 has a structure in which a cross-sectional area A2 of an outlet side 542 connected to the external space of the pack housing 100 is smaller than a cross-sectional area A1 of an inlet side 541 connected to the internal space 115.

That is, when the cross-sectional area A1 of the inlet side 541 is formed to be larger than the cross-sectional area A2 of the outlet side 542, gas generated in the internal space may be easily discharged externally through the vent portion 500, compared to a case in which the cross-sectional areas of the inlet side 541 and the outlet side 542 are maintained to be the same. Accordingly, a pressure increase inside the battery pack 1 is limited.

In addition, since the cross-sectional area A2 of the outlet side 542 is formed to be smaller than the cross-sectional area A1 of the inlet side 541, the air outside the pack housing 100 is difficult to be introduced into the internal space 115 through the vent portion 500.

As a result, the vent portion 500 according to an exemplary embodiment may effectively block inflow of external air (oxygen) without excessively increasing the pressure increase inside the battery pack 1.

In an exemplary embodiment, the vent portion 500 may be provided in a form in which a cross-sectional area thereof decreases from the inside of the pack externally of the pack. The vent portion 500 may include a first region 543 connected to the inlet side 541 and having a relatively large cross-sectional shape and a second region 544 connected to the outlet side 542 and having a relatively small cross-sectional shape compared to the first region 543. When calculating an average cross-sectional area for a predetermined length of the vent portion 500 based on a cut surface, perpendicular to a length direction of the vent portion 500, an average cross-sectional area of the second region 544 may be smaller than that of the first region 543.

The first region 543 may extend from the inlet side 541 to the outlet side 542 in the same cross-sectional shape, and the second region 544 extends to the outlet side 542 in a form in which a cross-sectional area thereof decreases, compared to the first region 543.

Also, the first region 543 and the second region 544 may each have a circular cross-sectional shape as illustrated in FIG. 6B. In this case, a diameter D1 of the inlet side 541 has a larger shape than a diameter D2 of the outlet side 542.

In addition, when the first region 543 and the second region 544 each have a circular cross-sectional shape, the first region 543 of the vent portion 500 may have a hollow cylindrical shape with a constant diameter D1, and the second region 544 may have a hollow truncated cone shape having diameter decreasing toward the outlet side 542.

A boundary region BA, in which a cross-sectional structure is changed, is formed between the first region 543 and the second region 544. Whereas FIGS. 6A and 7B show a boundary region BA between the first region 543 and the second region 544 in the form of a prismatic shape, FIGS. 6C and 7A illustrate the embodiment in which the boundary region BA between the first region 543 and the second region 544 is connected to have a gentle curve .

In addition, the second region 544 may be inclined at a single inclination angle θ as illustrated in FIGS. 6A, 6C, 7A, and 7B or may have a structure in which the second region 544 is divided into two or more zones 544a and 544b in which inclination angles θa and θb in the respective regions are changed as illustrated in FIG. 6D. Here, the inclination angle θb in the zone 544b close to the outlet side 542 may be formed to be greater than the inclination angle θa in the zone 544a farther from the outlet side 542 so that the diameter D2 of the outlet side 542 is smaller than a diameter D2a of a portion located in the central portion of the second region 544.

As such, when the vent portion 500 has a circular cross-section, the possibility of vortex or turbulence occurring in the air flowing inside the vent portion 500 may be reduced, compared to ab prismatic cross-section, and thus, smooth flow from the inlet side 541 to the outlet side 542 may be formed. However, in the present disclosure, the cross-sectional shape of the vent portion 500 may be variously modified to an oval cross-section or the like, and does not exclude a prismatic cross-sectional structure.

Also, the vent portion 500 may have a structure in which an inclination angle is formed in both the first region 543 and the second region 544. For example, as illustrated in FIG. 6D, the first region 543 may have a shape in which the cross-sectional area decreases with a first inclination angle with respect to the length direction of the vent portion 500, and the second region 544 may have a shape in which the cross-sectional area decreases with a second inclination angle greater than the first inclination angle with respect to the length direction of the vent portion 500.

Meanwhile, a length L2 of the second region 544 may be 0.2 to 0.8 times a distance from the inlet side 541 to the outlet side 542, that is, a total length L of the vent portion 500. If the length L2 of the second region 544 is less than 0.2 times the total length L, the length L2 of the second region 544 may be excessively shortened. Accordingly, a possibility of introducing external air through the shortened second region 544 may be increased, and thus, an installation effect of the second region 544 may be reduced. Conversely, if the length L2 of the second region 544 exceeds 0.8 times the total length L, the length L1 of the first region 543 may be excessively short. In this case, since the second region 544 having a small cross-sectional area is formed to be long, gas may not be smoothly discharged from the internal space 115 through the second region 544, and accordingly, pressure in the internal space 115 of the battery pack 1 may be increased.

In addition, the cross-sectional area A2 of the outlet side 542 may be 0.2 to 0.8 times the cross-sectional area A1 of the inlet side 541. If the cross-sectional area A2 of the outlet side 542 is less than 0.2 times the cross-sectional area A1 of the inlet side, the cross-sectional area A2 of the outlet side 542 may be excessively small so that gas in the internal space 115 of the battery pack 1 may not be smoothly discharged, causing a problem in that pressure inside the battery pack 1 increases.

Preferably, the cross-sectional area A2 of the outlet side 542 may be 0.4 to 0.7 times the cross-sectional area A1 of the inlet side 541. In this case, by securing the cross-sectional area A2 of the outlet side 542, the effect of smoothly discharging the gas in the internal space 115 of the battery pack 1 externally and the effect of minimizing inflow of external air using a difference between the cross-sectional areas of the inlet side 541 and the outlet side 542 may be sufficiently achieved.

Meanwhile, specific values of the cross-sectional area A1 of the inlet side 541 of the vent portion 500, the cross-sectional area A2 of the outlet side 542, the length L1 of the first region 543, and the length L2 of the second region 544 may be determined according to a volume of the internal space 115 of the battery pack 1 and the position and shape of the vent hole.

In addition, in FIGS. 1 to 4, only a case in which the vent portion 500 has the first region 543 and the second region 544 is illustrated, but it is also possible to provide a third region having a cross-sectional shape according to the length direction of the vent portion 500, different from those of the first region 543 and the second region 544, between the first region 543 and the second region 544. That is, a third region having a value between the average cross-sectional area of the first region 543 and the average cross-sectional area of the second region 544 may be provided between the first region 543 and the second region 544.

The vent portion 500 may be formed in the shape of a hole in the side frame 112 of the pack housing 100 when an outer wall of the pack housing 100 has a sufficient thickness. That is, as illustrated in FIG. 6A, the vent portion 500 may be formed by machining a hole in which the diameter D1 of the inlet side 541 is greater than the diameter D2 of the outlet side 542 in the side frame 112 of the pack housing 100.

Meanwhile, if the thickness of the side frame 112 of the pack housing 100 is not sufficient, at least a portion of the vent portion 500 may protrude outwardly of the side frame 112 of the pack housing 100 as illustrated in FIGS. 7A and 7B. For example, when a length of the vent portion 500 is 48 mm and a thickness of the side frame 112 is 20 mm, the vent portion 500 may have a structure protruding outwardly of the pack housing 100 by 28 mm.

In addition, the vent portion 500 may include a venting guide member 546 attached to the side frame 112 of the pack housing 100. The venting guide member 546 may have a shape in which the first region 543 and the second region 544 are formed, as illustrated in FIG. 7A. At this time, the venting guide member 546 may be mounted on an inner surface of a hole formed in the pack housing 100 and matches with the inner surface of the side frame 112. Alternatively, the venting guide member 546 may have a shape in which only a partial region of the vent portion 500 is formed, as illustrated in FIG. 7B. At this time, the venting guide member 545 may have a shape attached to an outer surface of the side frame 112 of the venting guide member 545.

In the vent portion 500, the inlet side 541 may be positioned on the same line as the inner surface of the side frame 112 of the pack housing 100. If the inlet side 541 of the vent portion 500 has a pipe shape protruding inwardly of the inner surface of an outer wall of the pack housing 100, an eddy current or turbulence may occur in the circumference of the inlet side 541 protruding into the internal space 115 in a pipe shape. For example, assuming that the venting guide member 546 has a shape extending to the left in FIG. 7A, a phenomenon (e.g., a vortex) in which air flowing along the inner surface of the outer wall of the pack housing 100 does not flow directly into the inlet of the venting guide member but a flow thereof is not uniform occurs. However, when the inlet side 541 of the vent portion 500 is positioned on the same line as the inner surface of the outer wall of the pack housing 100 as in an exemplary embodiment in the present disclosure, gas in the internal space 115 may flow along the inner surface of side frame 112 and easily flow to the inlet side 541 of the vent portion 500 to be discharged externally, thereby effectively improving the flow of gas discharged from the pack housing 100.

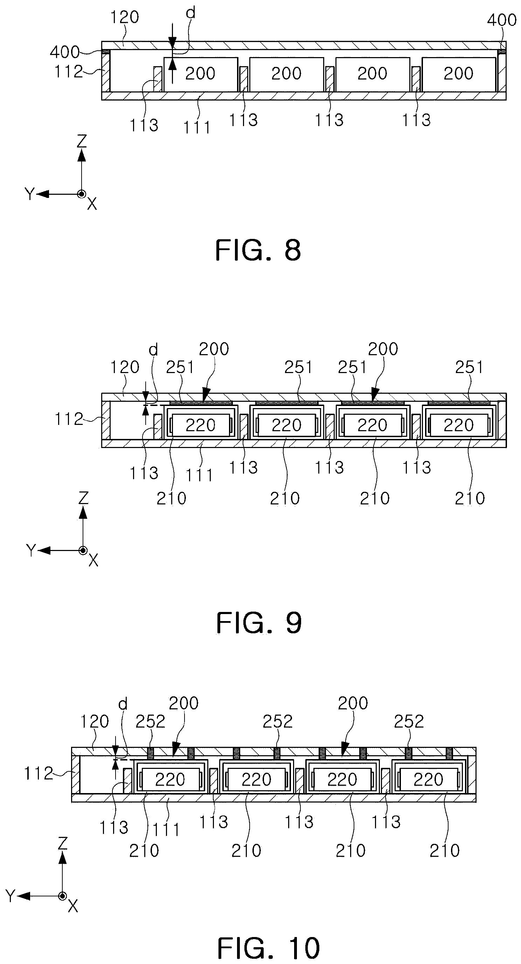

FIG. 8 is an internal cross-sectional view of a battery pack according to an exemplary embodiment. FIG. 9 is an internal cross-sectional view of a battery pack in which a battery module and a pack cover are coupled to an adhesive member according to an exemplary embodiment. FIG. 10 is an internal cross-sectional view of a battery pack in which a battery module and a pack cover are mechanically coupled according to an exemplary embodiment. FIGS. 8 to 10 are cross-sectional views taken along line I-I' of the battery pack 1 in FIG. 1.

Referring to FIGS. 8 to 10, in an exemplary embodiment, a gap between the battery module 200 and the pack cover 120 may be provided to be relatively small. In an exemplary embodiment, the gap d between the battery module 200 and the pack cover 120 may be set to 100 mm or less. That is, an air layer having a thickness of 100 mm or less may be formed between the battery module 200 and the pack cover 120. For example, the air layer may be defined as a space between the pack cover 120 and the module case 210.

If the gap d between the battery module 200 and the pack cover 120 is large, gas generated during thermal runaway may move to the corresponding gap d, thereby reducing a gas exhaust rate from the vent hole. According to an exemplary embodiment, as the pack cover 120 is positioned closer to the module case 210, the volume of the empty space inside the battery pack 1 may be reduced, the internal pressure of the battery pack 1 may be quickly increased during thermal runaway, which may increase a gas ejection rate. Ignition of the gas may be prevented according to the increase of the gas ejection rate.

In addition, by maintaining the gap d between the battery module 200 and the pack cover 120 to be small, the air inside the pack may be discharged externally within a relatively short time, which may prevent the premixed combustion of gas.

When air is introduced into the battery pack 1, the air may be mixed with the high-temperature and high-pressure gas discharged from the battery cell, which may lead to an occurrence of combustion and flames. Therefore, it is important to seal the inside and outside of the battery pack 1. In addition, when gas leaks from a portion other than the vent portion 500 in a thermal runaway situation, the gas ejection rate from the vent portion 500 may be lowered and the gas may be ignited.

In an exemplary embodiment, a sealing member 400 may be disposed between the pack cover 120 and the pack frame 110. In an exemplary embodiment, the pack frame 110 may include a lower plate 111 disposed below the plurality of battery modules 200 and a side frame 112 extending upwardly from the lower plate 111, and the side frame 112 may be provided in the form of a side wall surrounding the plurality of battery modules 200. In addition, the sealing member 400 may be disposed between the side frame 112 and the pack cover 120. For example, when the edge of the pack cover 120 is seated on a top surface of the side frame 112, the sealing member 400 may be applied between the edge of the pack cover 120 and the top surface of the side frame 112. Due to the sealing member 400, the entirety or most portion of the gas occurring inside the pack housing 100 may be discharged externally of the housing through the vent portion 500, thereby ensuring a relatively high discharge rate. In addition, since air does not flow into the battery pack 1, combustion of gas inside the pack may be prevented or minimized.

In an exemplary embodiment, the sealing member 400 may include a fire resistant material or a heat resistant material. Accordingly, even if a high-temperature gas or flame occurs inside the pack, damage to the sealing member 400 may be prevented or minimized, and further, sealing between the pack frame 110 and the pack cover 120 may be maintained.

Meanwhile, when the internal pressure of the battery pack 1 rapidly increases due to thermal runaway inside the battery pack 1, the pack cover 120 may be deformed and the gap d between the battery module 200 and the pack cover 120 may be increased. To prevent this, in an exemplary embodiment, the pack cover 120 may be fixedly coupled to the battery module 200. In an exemplary embodiment, the pack cover 120 may be fixedly coupled to some or all of the plurality of battery modules 200 disposed inside the pack housing 100.

Referring to FIG. 9, in an exemplary embodiment, an adhesive member 251 may be attached between the module case 210 and the pack cover 120. The adhesive member 251 may include a material having excellent heat dissipation characteristics, such as thermal resin.

Referring to FIG. 10, in an exemplary embodiment, the battery module 200 and the pack cover 120 may be mechanically coupled. For example, the module case 210 and the pack cover 120 may be coupled by a bolt 252.

Even if an internal pressure of the battery pack 1 increases and the pack cover 120 is about to be separated from the battery module 200, since the battery module 200 and the pack cover 120 are coupled to each other, the gap d between the battery module 200 and the pack cover may be maintained at a certain level.

Meanwhile, rigidity of the pack housing 100 should be improved in order to secure the gas exhaust rate. Due to the gas occurring inside the pack housing 100, the internal pressure of the pack housing 100 may increase, and accordingly, the pack housing 100 may be deformed to be cracked. For example, a gap may be formed between the pack frame 110 and the pack cover 120. In this case, the gas exhaust rate through the vent portion 500 may be slowed, so that the gas discharged externally of the pack may be ignited. In addition, air may be introduced from the outside of the pack housing 100 to the inside, which may burn the gas to accelerate heat propagation inside the battery pack 1.

To solve this problem, in an exemplary embodiment, the pack cover 120 may be formed of a material with high rigidity. For example, the pack cover 120 may be formed of a steel material. As the rigidity of the pack cover 120 increases, deformation of the pack cover 120 may be suppressed, which may contribute to preventing inflow of external air into the pack housing 100 or quickly escaping of gas occurring inside the housing externally through the vent portion 500. That is, as the rigidity of the pack cover 120 is improved, even if a large amount of gas occurs inside the battery pack 1, the gas may be rapidly discharged through the vent portion 500, and external air may be prevented from flowing into the battery pack 1 to delay heat propagation inside the battery pack 1.

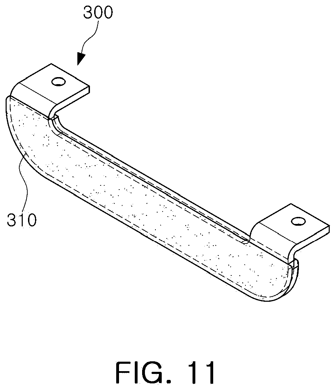

FIG. 11 illustrates an external busbar and a cover member according to an exemplary embodiment.

In the battery pack 1 including the plurality of battery modules 200, when any one battery module 200 thermally runs, gas, flames, as well as conductive particles, may be discharged.

When the conductive particles diffuse around the external busbar 300, an insulating state between the external busbar 300 and other members may be broken. For example, the module case 210 or the pack housing 100 may include a conductive material such as aluminum, and the external busbar 300 is disposed at a predetermined distance from the module case 210 or the pack housing 100. However, if a gas containing conductive particles surrounds the periphery of the external busbar 300, an insulation distance between the external busbar 300 and the module case 210 (or the pack housing 100) is shortened, which may cause a short circuit between the external busbar and the module case 210 (or the pack housing 100). Due to this, thermal runaway may spread to other battery modules inside the battery pack 1. Accordingly, exposure of the external busbar 300 to conductive particles in a thermal runaway situation should be minimized.

In an exemplary embodiment, the external busbar 300 may be surrounded by the cover member 310 so as not to be exposed to conductive particles. The cover member 310 may be configured to prevent or minimize contact between the external busbar 300 and the conductive particles. For example, the cover member 310 may be provided to cover at least a portion of the surface of the external busbar 300.

In an exemplary embodiment, the cover member 310 may be formed of a flame-retardant material or a fire-resisting insulating material. For example, the cover member 310 may be formed of a material that is not melted or ignited below 1000 degrees Celsius. For example, the cover member 310 may include a silicon or mica material.

In an exemplary embodiment, the cover member 310 may be formed of a material having electrical insulating properties, such as resin. In addition, the cover member 310 may be formed of a material having heat resistance performance capable of maintaining a shape at a high temperature. For example, the cover member 310 may be formed of a resin material or a fiber composite material having heat resistance performance of 150°C or higher.

In an exemplary embodiment, the cover member 310 may include a resin or a fiber composite material primarily covering the surface of the external busbar 300 and a flame retardant material (e.g., silicone or mica) secondarily covering the surface of the resin or fiber composite material.

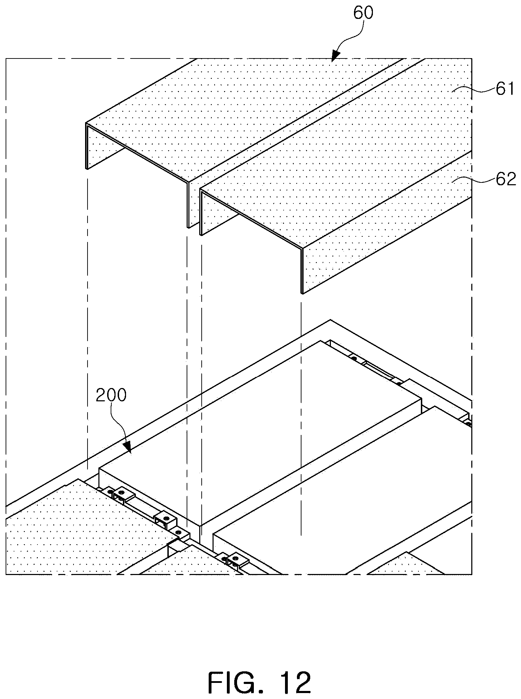

FIG. 12 illustrates a second TP blocking member 60 covering the outside of the battery module 200 in an exemplary embodiment.

In an exemplary embodiment, the second TP blocking member 60 may be disposed between the battery module 200 and the pack cover 120. When a fire occurs in the battery module 200, gas, flames, dust, and conductive particles may spread to the space inside the battery pack. In an exemplary embodiment, the second TP blocking member 60 may be disposed in at least a portion of the outer surface of the battery module 200, so that the battery module 200 may be protected from flames or gas ejected from the other battery module 200, which may prevent a chain ignition or thermal runaway.

The second TP blocking member 60 may be formed of a flame-retardant material or a fire-resisting insulating material capable of blocking the propagation of flames. In the present exemplary embodiment, the second TP blocking member 60 may be formed of a material that does not melt or ignite below 1000 degrees Celsius. In addition, in order to increase the heat resistance performance, the second TP blocking member 60 may be formed by forming a plate having a thickness of 1 mm or more. However, the configuration of the present disclosure is not limited thereto.

In an exemplary embodiment, the second TP blocking member 60 may be formed to cover an upper portion and a side portion of the battery module 200. The second TP blocking member 60 may be coupled to each battery module 200 in the form of at least partially covering the battery module 200 to suppress the spread of flames or conductive particles. The second TP blocking member 60 may include a top cover 61 disposed at an upper portion of the battery module 200 and a side cover 62 extending from the top cover 61 to face both side surfaces of the battery module 200.

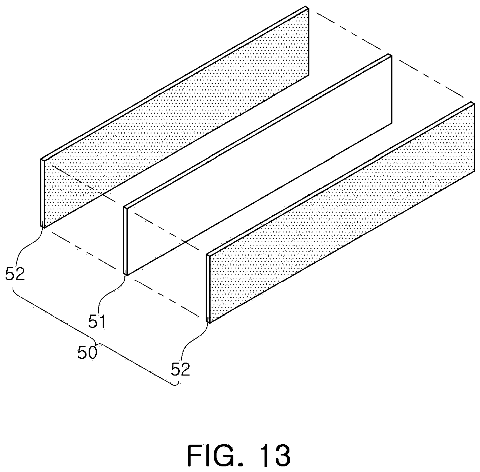

FIG. 13 is an example of a TP blocking member disposed between battery cells according to an exemplary embodiment.

In an exemplary embodiment, the first TP blocking member 50 may include a heat resistant sheet 51 and a pad 52 disposed on at least one surface of the heat resistant sheet 51. The heat resistant sheet 51 may include a material having excellent heat resistance and/or fire resistance. For example, the heat resistant sheet 51 may include mica. Since the heat resistant sheet 51 maintains its original shape relatively well even in high heat or flames, the first TP blocking member 50 may block or delay heat transfer more stably.

The pad 52 may be formed of an elastically deformable material. Since the heat resistant sheet 51 has relatively high rigidity, if the heat resistant sheet 51 directly touches the battery cells, the battery cells may be damaged. The pad 52 may be disposed on the battery cell together with the heat resistant sheet 51 and may be compressed when the battery cells are pressed against each other in a stacking direction. Accordingly, the pad 52 may prevent damage to the battery cells and make a pressing force applied to one surface of the battery cells uniform. For example, if a portion of a battery cell becomes convex due to swelling, stress may be concentrated in the corresponding portion, and in this case, the pad 52 may be compressed in response to the deformation of the battery cell and may make the pressure applied to one surface of the battery cell uniform.

In an exemplary embodiment, the pad 52 may include a material having a relatively lower thermal conductivity than the heat resistant sheet 51. For example, the pad 52 may be formed of a material having a thermal conductivity of 0.1 W/(m·K) or less when measured according to the ISO 22007 standard. In an exemplary embodiment, the pad 52 includes an insulating material. For example, insulation resistance of the pad 52, when measured according to ASTM D257 standard, may be 500 megaohms (MΩ) or more.

According to an exemplary embodiment in the present disclosure, a battery pack having high safety may be provided. In addition, high-temperature flammable gas occurring due to thermal runaway of the battery pack may be discharged externally as quickly as possible without ignition, which may delay or suppress thermal runaway or heat propagation inside the battery pack. In addition, a safer battery pack, in which flammable gas occurring is ejected externally of the pack without being ignited, may be provided.

## Claims

1. A battery pack (1) comprising:
a pack housing (100);
at least one battery module (200) disposed inside the pack housing; and
a vent hole (530) connecting inside and outside of the pack housing,
wherein the battery module includes a plurality of battery cells (220) and a first thermal propagation blocking member (50) disposed between the plurality of battery cells,
wherein the vent hole is formed so that a cross-sectional area (A2) of an outlet side (542) connected to an external space of the pack housing is smaller than a cross-sectional area (A1) of an inlet side (541) connected to an internal space (115) of the pack housing, and
wherein the vent hole includes:
a first region (543) connected to the inlet side (541) of the pack housing,
a second region (544) connected to the outlet side (542) of the pack housing and having a relatively small cross-sectional shape compared to the first region (543), wherein the second region (544) extends to the outlet side (542) in a form in which a cross-sectional area thereof decreases, and
a boundary region (BA) located between the first region and the second region, connecting the first region and the second region to have a curve.

2. The battery pack according to claim 1, further comprising:
an internal busbar (230) coupled to the plurality of battery cells,
wherein the first thermal propagation blocking member is coupled to the internal busbar.

3. The battery pack according to claim 1 or 2, wherein the pack housing includes a pack cover (120) covering an upper portion of the battery module, and a second thermal propagation blocking member (60) is disposed between the upper portion of the battery module and the pack cover.

4. The battery pack according to claim 3, wherein the second thermal propagation blocking member is formed to surround an upper portion and a side portion of the battery module.

5. The battery pack according to any one of claims 1 to 4, wherein a total cross-sectional area of the vent hole is greater than 1,000 mm² and less than or equal to 4,000 mm².

6. The battery pack according to claims 1 to 5, wherein the at least one battery module includes a module case (210) accommodating the plurality of battery cells.

7. The battery pack according to claim 6, wherein an air layer having a thickness of 100 mm or less is defined as a space between the pack cover and the module case.

8. The battery pack according to claim 1, wherein at least a portion of the vent hole has a cross-sectional area decreasing from the inlet side to the outlet side.

9. The battery pack according to any one of claims 3 to 8, wherein the pack cover includes a steel material.

10. The battery pack according to any one of claims 3 to 9, wherein the pack housing includes a side frame (112) surrounding the at least one battery module, and a sealing member (400) is disposed between the side frame and the pack cover.

11. The battery pack according to any one of claims 1 to 10, further comprising:
an external busbar (300) electrically connecting at least two battery modules to each other; and
a cover member (310) surrounding a surface of the external busbar.

12. The battery pack according to claim 11, wherein the cover member includes a fire resistant material or an insulating material.

13. The battery pack according to any one of claims 1 to 12, wherein the first thermal propagation blocking member includes a heat resistant sheet (51) and a pad (52) disposed on at least one surface of the heat resistant sheet and formed of a material that is elastically deformed.

14. The battery pack according to claim 13, wherein the heat resistant sheet includes mica.

## Patentansprüche

1. Ein Batteriepack (1), umfassend:
ein Packgehäuse (100);
mindestens ein Batteriemodul (200), das innerhalb des Packgehäuses vorgesehen ist; und
ein Entlüftungsloch (530), das das Innere und das Äußere des Packgehäuses verbindet,
wobei das Batteriemodul eine Mehrzahl von Batteriezellen (220) und ein erstes Wärmeausbreitungsblockierelement (50) umfasst, das zwischen der Mehrzahl von Batteriezellen vorgesehen ist,
wobei das Entlüftungsloch so ausgebildet ist, dass eine Querschnittsfläche (A2) einer Auslassseite (542), die an einen Außenraum des Packgehäuses angeschlossen ist, kleiner ist als eine Querschnittsfläche (A1) einer Einlassseite (541), die an einen Innenraum (115) des Packgehäuses angeschlossen ist, und
wobei das Entlüftungsloch einschließt:
einen ersten Bereich (543), der an die Einlassseite (541) des Packgehäuses angeschlossen ist,
einen zweiten Bereich (544), der an die Auslassseite (542) des Packgehäuses angeschlossen ist und eine relativ kleine Querschnittsform im Vergleich zu dem ersten Bereich (543) aufweist, wobei sich der zweite Bereich (544) zu der Auslassseite (542) in einer Form erstreckt, in der eine Querschnittsfläche davon abnimmt, und
einen Grenzbereich (BA), der zwischen dem ersten Bereich und dem zweiten Bereich angeordnet ist und den ersten Bereich und den zweiten Bereich so verbindet, dass eine Krümmung vorliegt.

2. Das Batteriepack gemäß Anspruch 1, ferner umfassend:
eine interne Sammelschiene (230), die an die Mehrzahl von Batteriezellen gekoppelt ist,
wobei das erste Wärmeausbreitungsblockierelement an die interne Sammelschiene gekoppelt ist.

3. Das Batteriepack gemäß Anspruch 1 oder 2, wobei das Packgehäuse eine Packabdeckung (120) einschließt, die einen oberen Abschnitt des Batteriemoduls bedeckt, und ein zweites Wärmeausbreitungsblockierelement (60) zwischen dem oberen Abschnitt des Batteriemoduls und der Packabdeckung vorgesehen ist.

4. Das Batteriepack gemäß Anspruch 3, wobei das zweite Wärmeausbreitungsblockierelement so ausgebildet ist, dass es einen oberen Abschnitt und einen Seitenabschnitt des Batteriemoduls umgibt.

5. Das Batteriepack gemäß einem der Ansprüche 1 bis 4, wobei eine Gesamtquerschnittsfläche des Entlüftungslochs größer als 1.000 mm² und kleiner als oder gleich 4.000 mm² ist.

6. Das Batteriepack gemäß den Ansprüchen 1 bis 5, wobei das mindestens eine Batteriemodul ein Modulgehäuse (210) einschließt, das die Mehrzahl von Batteriezellen aufnimmt.

7. Das Batteriepack gemäß Anspruch 6, wobei eine Luftschicht mit einer Dicke von 100 mm oder weniger als ein Raum zwischen der Packabdeckung und dem Modulgehäuse definiert ist.

8. Das Batteriepack gemäß Anspruch 1, wobei mindestens ein Abschnitt des Entlüftungslochs eine Querschnittsfläche aufweist, die von der Einlassseite zu der Auslassseite abnimmt.

9. Das Batteriepack gemäß einem der Ansprüche 3 bis 8, wobei die Packabdeckung ein Stahlmaterial einschließt.

10. Das Batteriepack gemäß einem der Ansprüche 3 bis 9, wobei das Packgehäuse einen Seitenrahmen (112) einschließt, der das mindestens eine Batteriemodul umgibt, und ein Dichtungselement (400) zwischen dem Seitenrahmen und der Packabdeckung vorgesehen ist.

11. Das Batteriepack gemäß einem der Ansprüche 1 bis 10, ferner umfassend:
eine externe Sammelschiene (300), die mindestens zwei Batteriemodule elektrisch miteinander verbindet; und
ein Abdeckelement (310), das eine Oberfläche der externen Sammelschiene umgibt.

12. Das Batteriepack gemäß Anspruch 11, wobei das Abdeckelement ein feuerbeständiges Material oder ein isolierendes Material einschließt.

13. Das Batteriepack gemäß einem der Ansprüche 1 bis 12, wobei das erste Wärmeausbreitungsblockierelement eine wärmebeständige Platte (51) und eine Kontaktstelle (52) einschließt, die auf mindestens einer Oberfläche der wärmebeständigen Platte vorgesehen ist und aus einem Material gebildet ist, das elastisch verformt ist.

14. Das Batteriepack gemäß Anspruch 13, wobei die wärmebeständige Platte Glimmer einschließt.

## Revendications

1. Une bloc-batterie (1) comprenant :
un boîtier de bloc (100) ;
au moins un module de batterie (200) disposé à l'intérieur du boîtier de bloc ; et
un trou d'évent (530) connectant l'intérieur et l'extérieur du boîtier de bloc,
dans laquelle le module de batterie comprend une pluralité d'éléments de batterie (220) et un premier élément de blocage de propagation thermique (50) disposé entre la pluralité d'éléments de batterie,
dans lequel le trou d'évent est formé de sorte qu'une aire de section transversale (A2) d'un côté de sortie (542) connectée à un espace externe du boîtier de bloc est plus petite qu'une aire de section transversale (A1) d'un côté d'entrée (541) connectée à un espace interne (115) du boîtier de bloc, et
dans laquelle le trou d'évent comprend :
une première région (543) connectée au côté d'entrée (541) du boîtier de bloc,
une seconde région (544) connectée au côté de sortie (542) du boîtier de bloc et ayant une forme de section transversale relativement petite par rapport à la première région (543), dans laquelle la seconde région (544) s'étend jusqu'au côté de sortie (542) sous une forme dans laquelle une aire de section transversale de celle-ci diminue, et
une région de limite (BA) située entre la première région et la seconde région, connectant la première région et la seconde région pour avoir une courbe.

2. La bloc-batterie selon la revendication 1, comprenant en outre :
une barre omnibus interne (230) couplée à la pluralité d'éléments de batterie,
dans laquelle le premier élément de blocage de propagation thermique est couplé à la barre omnibus interne.

3. La bloc-batterie selon la revendication 1 ou 2, dans laquelle le boîtier de bloc comprend un couvercle de bloc (120) recouvrant une portion supérieure du module de batterie, et un deuxième élément de blocage de propagation thermique (60) est disposé entre la portion supérieure du module de batterie et le couvercle de bloc.

4. La bloc-batterie selon la revendication 3, dans laquelle le deuxième élément de blocage de propagation thermique est formé pour entourer une portion supérieure et une portion latérale du module de batterie.

5. La bloc-batterie selon l'une quelconque des revendications 1 à 4, dans laquelle une aire de section transversale totale du trou d'évent est plus grande que 1 000 mm² et inférieure ou égale à 4 000 mm².

6. La bloc-batterie selon les revendications 1 à 5, dans laquelle l'au moins un module de batterie comprend un boîtier de module (210) logeant la pluralité d'éléments de batterie.

7. La bloc-batterie selon la revendication 6, dans laquelle une couche d'air ayant une épaisseur de 100 mm ou moins est définie comme un espace entre le couvercle de bloc et le boîtier de module.

8. La bloc-batterie selon la revendication 1, dans laquelle au moins une portion du trou d'évent a une aire de section transversale diminuant du côté d'entrée au côté de sortie.

9. La bloc-batterie selon l'une quelconque des revendications 3 à 8, dans laquelle le couvercle de bloc comprend un matériau en acier.

10. La bloc-batterie selon l'une quelconque des revendications 3 à 9, dans laquelle le boîtier de bloc comprend un cadre latéral (112) entourant l'au moins un module de batterie, et un élément d'étanchéité (400) est disposé entre le cadre latéral et le couvercle de bloc.

11. La bloc-batterie selon l'une quelconque des revendications 1 à 10, comprenant en outre :
une barre omnibus externe (300) connectant électriquement au moins deux modules de batterie l'un à l'autre ; et
un élément de couvercle (310) entourant une surface de la barre omnibus externe.

12. La bloc-batterie selon la revendication 11, dans laquelle l'élément de couvercle comprend un matériau résistant au feu ou un matériau isolant.

13. La bloc-batterie selon l'une quelconque des revendications 1 à 12, dans laquelle le premier élément de blocage de propagation thermique comprend une feuille résistante à la chaleur (51) et une pastille (52) disposée sur au moins une surface de la feuille résistante à la chaleur et formée d'un matériau qui est élastiquement déformé.

14. La bloc-batterie selon la revendication 13, dans laquelle la feuille résistante à la chaleur comprend du mica.
